# EUROPEAN PATENT SPECIFICATION

(11) **EP 2 715 009 B1**
(45) Date of publication and mention of the grant of the patent: **14.10.2015**
(21) Application number: 12789566.2
(22) Date of filing: 21.05.2012
(51) Int. Cl.: E04C 5/06, E04C 5/16

(54) **SHEAR REINFORCEMENT SYSTEM FOR EMBEDDING IN FLAT SLABS**
SCHUBBEWEHRUNGSSYSTEM ZUR EINBETTUNG IN FLACHPLATTEN
SYSTÈME D'ARMATURE DE CISAILLEMENT POUR L'INCORPORATION DANS DES DALLES PLATES

(30) Priority: 23.05.2011 FI 20115501
(43) Date of publication of application: 09.04.2014
(73) Proprietor: Peikko Group Oy, 15170 Lahti (FI)
(72) Inventor: SCHÄFER, Damaris, 34513 Waldeck (DE); SCHMIDT, Patrick, 66292 Riegelsberg (DE)
(74) Representative: Boco IP Oy Ab
(86) International application number: PCT/FI2012/050478
(87) International publication number: WO 2012/160252

(56) References cited:
- EP-A1- 1 659 231
- EP-A1- 1 659 231
- EP-A2- 0 947 641
- DE-U1- 20 216 945
- US-A- 6 161 352
- US-A- 6 161 352

## Description

### Field of the invention

The invention relates to a shear reinforcement system for embedding in flat slabs such as slab floors as defined in the preamble of independent claim 1.

Publication DE 20 2004 018 051 U1 presents a shear reinforcement system according to the preamble of claim 1 for a slab floor having elongate shear reinforcement members to be positioned transverse to the plane of the slab floor and a support member to which the ends of several elongate shear reinforcement members are connected. The end of an elongate shear reinforcement member is connected to the support member by means of a connection member that is on one side fastened by means of a form-locking means integrated into the connection member to the end of an elongate shear reinforcement member and that on the other side penetrates a pre-defined round hole on the support member.

Publication DE 10 2004 006 618 A1 presents a shear reinforcement system for a slap floor having elongate shear reinforcement members to be positioned transverse to the plane of the slab floor and a support member to which the ends of several elongate shear reinforcement members are connected. The end of an elongate shear reinforcement member is connected to the support member by means of a connection member that is on one side glued to the end of an elongate shear reinforcement member and that on the other side penetrates a pre-defined round hole on the support member.

A disadvantage with these solutions is that an elongate shear reinforcement member can only be connected to the support member at a pre-defined location. This might constitute a problem if, for example, this leads to that the elongate shear reinforcement member will be located at exactly the same place in the flat slab as a part of the reinforcement grid that also is cast into the flat slab. In a such situation the whole shear reinforcement system must be moved of the elongate shear reinforcement member has to be removed.

### Objective of the invention

The object of the invention is to provide a shear reinforcement system for embedding in flat slabs which solves the above-identified problem.

### Short description of the invention

The shear reinforcement system of the invention is characterized by the definitions of independent claim 1.

Preferred embodiments of the shear reinforcement system are defined in the dependent claims 2 to 10.

The invention is based on providing at least one slot hole in the form of an elongated slot hole in the support member. The elongated slot hole makes it possible to move the position of the stud with respect of the support member.

The shear reinforcement system according to the invention provides for advantages both in bottom installation in precast applications, where the studs projects upwards from a support member, and in top installation in in-situ application, where the studs projects downwards from a support member.

In bottom installation in precast applications the support member of the shear reinforcement system can firstly be installed with spacers onto the formwork for holding the support member in place in relation to the formwork, after which the slab reinforcement grid is distributed into the formwork for example by a robot. Here the shear reinforcement system according to the invention makes it possible to move the studs within the elongated slot holes so that the studs fit in the reinforcement grid when attaching the studs to the support member after that the slab reinforcement grid has been distributed into the formwork.

In case of top installation in in-situ application the whole slab reinforcement is already mounted and the shear reinforcement system has to be installed as a complete assemble unit into the slab reinforcement grid. Here shear reinforcement system according to the invention makes it possible to move the studs in relation to the support member within the elongated slot holes so that the shear reinforcement system fits into the reinforcement grid.

### List of figures

In the following the invention will be described in more detail by referring to the figures, which
figure 1 is a principle view of a preferred embodiment the shear reinforcement system,
figure 2 shows the shear reinforcement system shown in figure 1 as seen from under side,
figure 3 shows the shear reinforcement system shown in figure 1 as seen from one side,
figure 4 shows the shear reinforcement system shown in figure 1 as seen from above,
figure 5 shows the shear reinforcement system shown in figure 1 as seen from under side,
figure 6 shows an elongate shear reinforcement member of the shear reinforcement system shown in figure 1,
figure 7 the elongate shear reinforcement member shown in figure 4 as seen from one side,

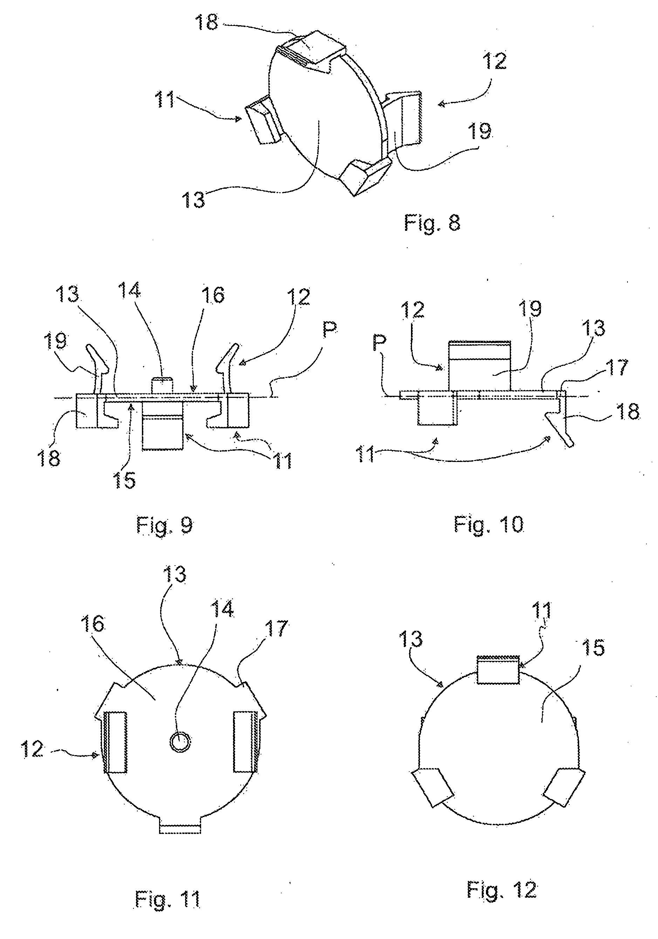

figure 8 shows a connection member of the shear reinforcement system shown in figure 1,
figure 9 shows the connection member shown in figure 8 as seen from one side,
figure 10 shows the connection member shown in figure 8 as seen from another side,
figure 11 shows the connection member shown in figure 8 as seen from above,
figure 12 shows the connection member shown in figure 8 as seen from under side,

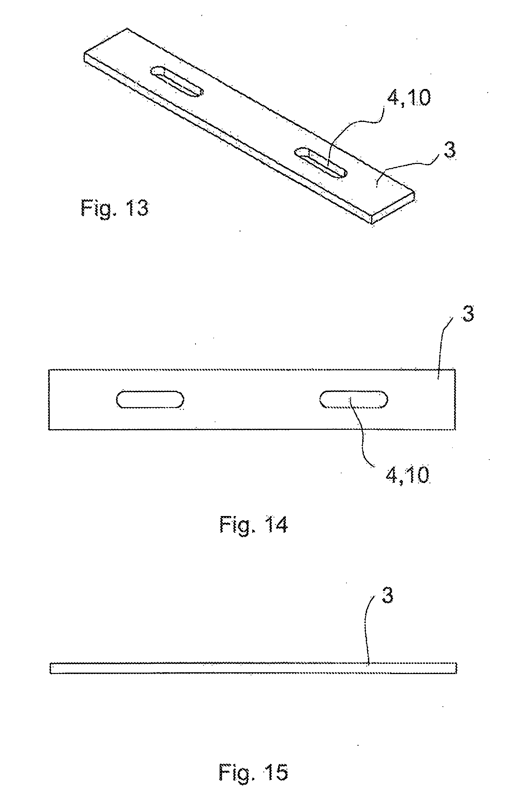

figure 13 shows a support member of the shear reinforcement system shown in figure 1,
figure 14 shows the support member shown in figure 10 as seen from above,
figure 15 shows the support member shown in figure 10 as seen from one side.

### Detailed description of the invention

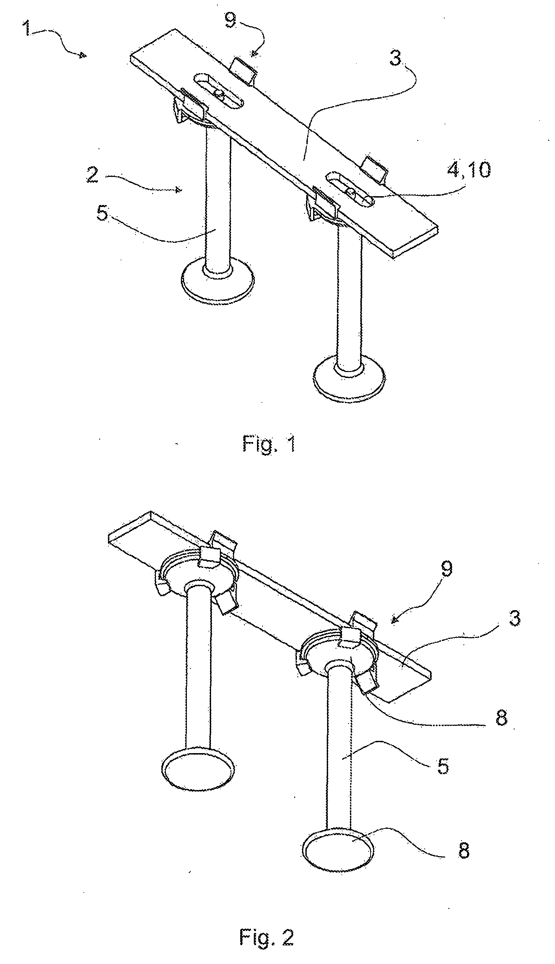

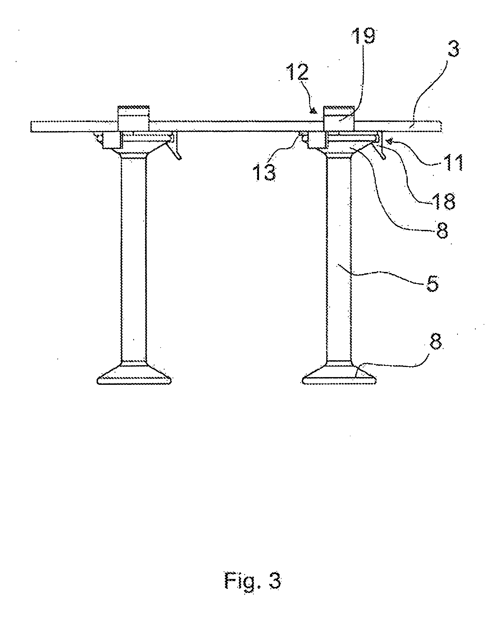

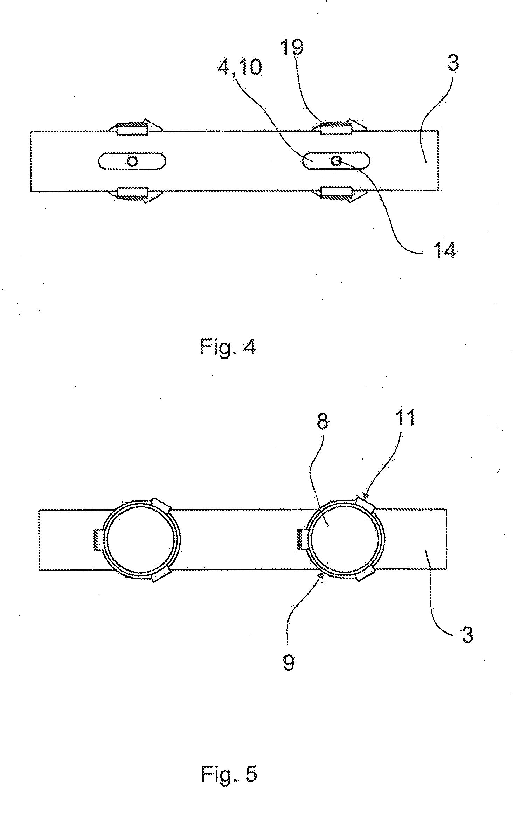

The figures 1 to 5 show an example of a shear reinforcement system 1 for embedding in flat slabs such as slab floors.

The shear reinforcement system 1 comprises elongate shear reinforcement members 2, which are to be positioned with their longitudinal axis transverse the plane of the flat slab, and a support member 3 to which several elongate shear reinforcement members 2 are to be connected or are connected to. The shear reinforcement system 1 shown in figures 1 to 5 has two elongate shear reinforcement members 2. It is obvious for a person skilled in the art that the number of elongate shear reinforcement members 2 can be larger. In the figures the support member 3 is essentially linear. It is obvious for a person skilled in the art that the support member 3 can comprise curved and linear portions and portions, which are angled in relation to such linear and curved portions.

The support member 3 is provided with at least one slot hole 4.

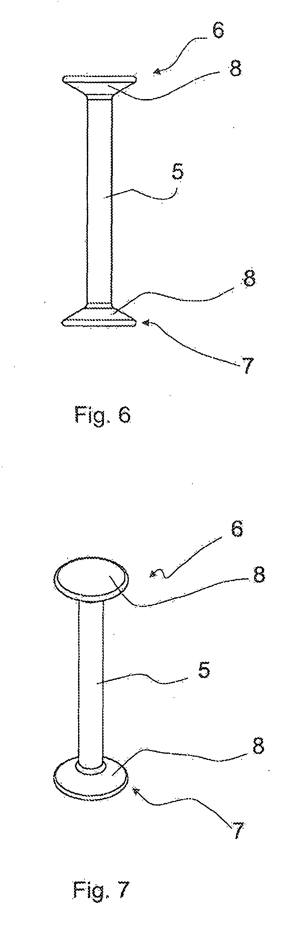

At least one elongate shear reinforcement member 2 is in the form of a stud 5 having a first end 6 and a second end 7 as seen in figures 6 and 7.

At least the first end 6 may be provided with a head 8. In the figures, both the first end 6 and the second end 7 are provided with a head 8.

At least one stud 5 is fastened to the support member 3 by means of a connection member 9 that is arranged between the stud 5 and the slot hole 4 in the support member 3.

The support member 3 is provided with at least one slot hole 4 in the form of an elongated slot hole 10. In the figures the elongated slot holes 10 are essentially linear. It is obvious for a person skilled in the art that the support member 3 can comprise at least one elongated slot hole 10 that is at least partly curved.

The shear reinforcement system 1 comprises a connection member 9 comprising a lower retainer 11 fastened to or to be fastened to a stud 5, an upper retainer 12 fastened or to be fastened to the support member 3, and a plate member 13 having a first side 15 on one side and a second side on the opposite side and which the plate member 13 forms a planar plate plane P. The lower retainer 11 and the upper retainer 12 are arranged to the plate member 13.

The lower retainer comprises at least one arm 17 arranged to extrude from the plate member 13 and to extend in the planar plate plane P. The lower retainer also comprises a first latching member 18 for fastening a stud to the connection member 9.

The upper retainer 12 comprises at least one second latching member 19 arranged to the second side 16 of the plate member 13 for fastening the connection member 9 to the support member 3.

A pin member 14 is arranged to the second side 16 of the plate member 13 and that is inserted into the elongated slot hole 10 of the support member 3 or that is to be insertable into the elongated slot hole 10 of the support member 3 when the connection member 9 is fastened to the support member 3 so that the connection member 9 is movable in relation to the support member 3 for a length of the support member 3 that is limited by the elongated slot hole 10. The elongated slot hole may extend in the direction of the support member.

The arm 17 and the first latching member 18 are arranged to form a latching arm such that the arm 17 and the first latching member 18 are arranged to be perpendicular or almost perpendicular to each other and to form a continuous single latching arm.

The shear reinforcement system 1 may comprise at least two latching arms.

The upper retainer 12 comprises two second latching members 19 to be fastened to the support member 3 such that the two second latching members 19 are arranged to the support member 3 on different sides of the elongated slot hole 10 in the support member 3.

The head 8 of the stud 5 is fastened to the connection member 9 by at least one first latching member 18.

The shear reinforcement system 1 may comprise a connection member 9 that is made at least partly of polymer or other synthetic material.

The support member 3 is preferably, but not necessarily, in the form of a flat bar.

The at least one first latching member 8 may comprise a release mechanism. The release mechanism can be for example such that one first latching member is made longer than the other first latching members or there can be a release lever attached to the first latching member or any other suitable release mechanism.

It is apparent to a person skilled in the art that as technology advanced, the basic idea of the invention can be implemented in various ways. The invention and its embodiments are therefore not restricted to the above examples, but they may vary within the scope of the claims.

## Claims

1. Shear reinforcement system (1) for embedding in flat slabs such as slab floors, wherein said shear reinforcement system (1) comprising
elongate shear reinforcement members (2), which are to be positioned with their longitudinal axis transverse the plane of the flat slab, and
a support member (3) to which several elongate shear reinforcement members (2) are connected to, wherein the support member (3) is provided with at least one slot hole (4),
wherein at least one elongate shear reinforcement member (2) is in the form of a stud (5), wherein at least one stud (5) is fastened to the support member (3) by means of a connection member (9) that is arranged between the stud (5) and the slot hole (4) in the support member (3),
wherein the connection member (9) comprising a lower retainer (11) fastened to a stud (5), an upper retainer (12) fastened to the support member (3), and a plate member (13) having a first side (15) on one side and a second side (16) on the opposite side, said plate member (13) forming a planar plate plane (P), and
wherein the lower retainer (11) and the upper retainer (12) being arranged to the plate member (13), wherein the lower retainer (11) comprising at least one arm (17) arranged to extrude from the plate member (13) and to extend in the planar plate plane (P), and at least one first latching member (18) for fastening a stud (5) to the connection member (9), wherein
the upper retainer (12) comprising at least one second latching member (19) arranged to the second side (16) of the plate member (13) for fastening the connection member (9) to the support member (3),
**characterized**
**by** the support member (3) being provided with at least one slot hole (4) in the form of an elongated slot hole (10), and
by a pin member (14) that is arranged to the second side (16) of the plate member (13) and that is inserted into the elongated slot hole (10) of the support member (3) when the connection member (9) is fastened to the support member (3) so that the connection member (9) is movable in relation to the support member (3) for a length of the support member (3) that is limited by the elongated slot hole (10).

2. The system according to claim 1, **characterized in that** the arm (17) and the first latching member (18) are arranged to form a latching arm.

3. The system according to claim 2, **characterized in that** the lower retainer (11) comprises at least two latching arms.

4. The system according to any of the claims 1-3, **characterized in that** the upper retainer (12) comprises two second latching members (19) to be fastened to the support member (3) such that the two second latching members (19) are arranged to the support member (3) on different sides of the elongated slot hole (10) in the support member (3).

5. The system according to any of the claims 1-4, **characterized by** a stud (5) having a first end (6) and a second end (7), wherein at least the first end (6) is provided with a head (8).

6. The system according to claim 5, **characterized in that** the head (8) of the stud (5) being fastened to the connection member (9) by at least one first latching member (18).

7. The system according to any of the claims 1 to 6, **characterized by** the connection member (9) being made at least partly of polymer or other synthetic material.

8. The system according to any of the claims 1 to 7, **characterized by** the support member (3) being in the form of a flat bar.

9. The system according to any of the claims 1 to 8, **characterized by** an elongated slot hole (10) extending in the direction of the support member (3).

10. The system according to any of the claims 1 to 9, **characterized in that** at least one first latching member (18) comprises a release mechanism.

## Patentansprüche

1. Scherverstärkungssystem (1) für Einbettung in flachen Platten wie z.B Plattenfussböden, wobei das Scherverstärkungssystem (1)
- verlängerte Scherverstärkungsglieder (2), die mit ihren Längsachsen quer zur Ebene der flachen Platte angeordnet werden, und
- ein Stützglied (3), an dem mehrere verlängerte Scherverstärkungsglieder (2) angeschlossen sind, wobei das Stützglied (3) wenigstens mit einem Schlitzloch (4) versehen ist,
wobei wenigstens ein verlängertes Scherverstärkungsglied (2) die Form eines Ansatzes (5) hat,
wobei wenigstens ein Ansatz (5) durch ein Verbindungsglied (9) am Stützglied (3) befestigt ist, wobei das Verbindungsglied (9) zwischen dem Ansatz (5) und dem Schlitzloch (4) im Stützglied angeordnet ist,
wobei das Verbindungsglied (9) einen unteren, am Ansatz (5) befestigten Halter (11), einen oberen, am Stützglied (3) befestigten Halter (12) und ein Plattenglied (13) umfasst, wobei das Plattenglied (13) eine erste Oberfläche (15) auf der einen Seite und eine zweite Oberfläche (16) auf der gegenüberliegenden Seite aufweist, wobei das Plattenglied (13) eine flache Plattenebene (P) bildet, und
wobei der untere Halter (11) und der obere Halter (12) am Plattenglied (13) angeordnet sind,
wobei der untere Halter (11) wenigstens einen Arm (17), der derart angeordnet ist, dass er aus dem Plattenglied (13) hinausragt und sich in der flachen Plattenebene (P) erstreckt, und wenigstens ein erstes Verriegelungsglied (18) zur Befestigung eines Ansatzes (5) am Verbindungsglied (9) aufweist, wobei
der obere Halter (12) wenigstens ein zweites Verriegelungsglied (19) aufweist, das auf der zweiten Seite (16) des Plattengliedes (13) zur Befestigung des Verbindungsglieds (9) am Stützglied (3) angeordnet ist,
**dadurch gekennzeichnet, dass**
das Stützglied (3) wenigstens mit einem Schlitzloch (4) mit der Form eines verlängerten Schlitzlochs versehen ist und
ein Stiftglied (14) vorliegt, das auf der zweiten Seite (16) des Plattenglieds (13) angeordnet ist und im verlängerten Schlitzloch (10) des Stützglieds (3) dann eingesteckt ist wenn das Verbindungsglied (9) am Stützglied (3) derart befestigt ist, dass das Verbindungsglied (9) im Verhältnis zum Stützglied (3) über eine durch das verlängerte Slitzloch (10) begrenzte Strecke des Stützglieds (3) beweglich ist.

2. System nach Anspruch 1, **dadurch gekennzeichnet, dass** der Arm (17) und das erste Verriegelungsglied (18) derart angeordnet sind, dass sie einen Veruegelungsarm bilden.

3. System nach Anspruch 2, **dadurch gekennzeichnet, dass** der untere Halter (11) mindestens zwei Verriegelungsarme umfasst.

4. System nach einem der Ansprüche 1 bis 3, **dadurch gekennzeichnet, dass** der obere Halter (12) zwei zweite Verriegelungsglieder (19) zur Befestigung am Stützglied (3) derart aufweist, dass diese zwei zweite Verriegelungsglieder (19) am Stützglied (3) auf unterschiedliche Seiten des verlängerten Slitzlochs (10) im Stützglied (3) angeordnet sind.

5. System nach einem der Ansprüche 1 bis 4, **dadurch gekennzeichnet, dass** ein Ansatz (5) mit einem ersten Ende (6) und einem zweiten Ende (7) vorhanden ist, wobi wenigstens das erste Ende (6) mit einem Kopf (8) versehen ist.

6. System nach Anspruch 5, **dadurch gekennzeichnet, dass** der Kopf (8) des Ansatzes (5) mit wenigstens einem ersten Verriegelungsglied (18) am Verbindungsglied (9) befestigt ist.

7. System nach einem der Ansprüche 1 bis 6, **dadurch gekennzeichnet, dass** das Verbindungsglied (9) wenigstens teilweise aus einem Polymer oder einem anderen syntetischen Material hergestellt ist.

8. System nach einem der Ansprüche 1 bis 7, **dadurch gekennzeichnet, dass** das Stützglied (3) die Form eines flachen Stabs hat.

9. System nach einem der Ansprüche 1 bis 8, **dadurch gekennzeichnet, dass** das verlängerte Schlitzloch (10) sich in die Richtung des Stützglieds (3) erstreckt.

10. System nach einem der Ansprüche 1 bis 9, **dadurch gekennzeichnet, dass** wenigstens ein erstes Verriegelungsglied (18) einen Auslösemechanismus aufweist.

## Revendications

1. Système de renforcement de cisaillement (1) pour être enfoncé à plaques plattes comme plaques du sol, ledit système de renfoncement (1) de cisaillement comprenant:
des membres (2) de renforcement de cisaillement allongés pour être mis en place avec ses axes longitudinaux en travers du plan de la plaque platte, et
un membre de support (3) connecté à plusieurs membres (2) de renforcement de cisaillement allongés, le membre de support étant fourni avec au moins un trou à fente (4), au moins un membre (2) de renforcement de cisaillement allongé ayant la forme d'un crampon (5),
au moins un crampon (5) étant attaché au membre de support (3) à l'aide d'un membre de connection (9) arrangé entre le crampon (5) et le trou à fente (4) du membre de support (3), le membre de connection (9) comprenant un reteneur bas (11) attaché au crampon (5), un reteneur haut (12) attaché au membre de support (3), et un membre de plateau (13) ayant le premier côté et le deuxième côté opposé, ledit membre de plateau (13) formant un plan plateau plat (P), et
le reteneur bas (11) et le reteneur haut (12) étant arrangés au membre de plateau (13),
le reteneur bas (11) comprenant au moins un bras (17) arrangé pour être protubérant du membre de plateau (13) et pout s'étendre dans le plan plateau plat (P), et au moins un premier membre de fermoir (18) pour attacher un crampon au membre de connection (9),
le reteneur haut (12) comprenant au moins un deuxième membre de fermoir (19) arrangé à l'autre côté (16) du membre de plateau (13) pour attacher le membre de connection (9) au membre de support (3),
**caractérisé en ce que**
le membre de support (3) est fourni avec au moins un trou à fente (4) ayant la forme d'un trou à fente allongé (10) et
un membre de épingle (14) arrangé à l'autre côté (16) du membre de plateau (13) et inseré dans le trou à fente allongé (10) du membre de support (3) lorsque le membre de connection (9) est attaché au membre de support (3) de manière à faire le membre de connection (9) mobile en relation avec membre de support (3) pour une longueur du membre de support (3) limité par le trou à fente allongé (10).

2. Système selon la revendication 1, **caractérisé en ce que** le bras (17) et le premier membre de fermoir (18) sont arrangés pour former un bras de fermoir.

3. Système selon la revendication 1, **caractérisé en ce que** le reteneur bas (11) comprend au moins deux bras de fermoir.

4. Système selon une des revendications 1-3, **caractérisé en ce que** le reteneur haut (12) comprend deux deuxième bras de fermoir (19) pour être attachés au membre de support (3) de manière à arranger les deux deuxième bras de fermoir (19) au membre de support (3) aux côtés differents du trou à fente allongé (10) dans le membre de support (3).

5. Système selon une des revendications 1-4, **caractérisé en ce que** le crampon (5) comprend le premier but (6) et le deuxième but (7), dont au moins le premier but (6) est fourni avec une tête (8).

6. Système selon la revendication 1, **caractérisé en ce que** le tête (8) du crampon (5) est attaché au membre de connection (9) avec au moins un premier membre de fermoir (18).

7. Système selon une des revendications 1-6, **caractérisé en ce que** le membre de connection (9) est au moins partiellement fait d'un polymère ou d'une autre matière synthétique.

8. Système selon une des revendications 1-7, **caractérisé en ce que** le membre de support (3) a la forme d'une barre platte.

9. Système selon une des revendications 1-8, **caractérisé en ce qu'**un trou à fente allongé (10) s'étend dans la direction du membre de support (3).

10. Système selon une des revendications 1-9, **caractérisé en ce que** au moins un premier membre de fermoir (18) comprend un mécanisme de relâchement.
